# EUROPEAN PATENT APPLICATION

(11) **EP 2 257 058 A2**
(43) Date of publication of application: **01.12.2010**
(21) Application number: 10158279.9
(22) Date of filing: 29.03.2010
(51) Int. Cl.: H04N 5/783, H04N 7/24

(54) **Program playback apparatus and program playback method**

(30) Priority: 29.05.2009 JP 2009131129
(71) Applicant: Kabushiki Kaisha Toshiba, Tokyo 105-8001 (JP)
(72) Inventor: Nishiguchi, Tomomi, Tokyo 105-8001 (JP); Yoshida, Hitoshi, Tokyo 105-8001 (JP); Ukai, Kaoru, Tokyo 105-8001 (JP)
(74) Representative: Henkel, Feiler & Hänzel

(57) **Abstract**

According to one embodiment, a program playback apparatus comprises a playback controller (110) configured to execute skip playback from a position a prescribed skip time ahead of a current playback position in response to one skip instruction during playback of a program, and to execute replay from a position a prescribed replay time back from the current playback position in response to one replay instruction during playback of the program, and a registration module (120) configured to register a successive skip time corresponding to successive skip instructions during playback of the program, and to register a first successive skip updated time, which is calculated based on a successive skip time and at least one of successive replay times corresponding to a successive skip repeat instruction and at least one of successive replay instructions which follow the successive skip repeat instruction, in place of the registered successive skip time.

## Description

One embodiment of the invention relates to a program playback apparatus and program playback method, which calculate a skip time in response to skip instructions during playback of a recorded program, and restart playback from a position the skip time ahead of the current playback position.

In recent years, recorders for recording programs in a DVD or HDD have prevailed. Also, TVs which incorporate such recorders have prevailed. The user often wants to view a recorded program while skipping CM intervals in the program. For example, when a recorder has a CM interval discrimination function, it can play back a program while skipping CM intervals discriminated by the CM interval discrimination function. Or the user may perform a skip or fast-forward operation with respect to a recorder while viewing a playback video picture. For example, the recorder restarts playback from a position 30 seconds ahead of the current playback position in response to one skip operation, or plays back a program at a ×2, ×4, or ×8 speed in response to the fast-forward operation. The user can view a program while skipping CM intervals by performing skip operations or fast-forward and stop operations with respect to the recorder.

However, the aforementioned CM interval discrimination function does not suffice as a CM interval skip method since it may often erroneously discriminate a CM interval. The user can surely skip a CM interval by the skip or fast-forward operation while viewing a playback video picture. However, the user has to make operations every time a CM is played back.

Jpn. Pat. Appln. KOKAI Publication No. 2006-339717 (reference 1) discloses a technique which simplifies such operations. That is, reference 1 discloses a technique which detects a time nearly equal to a first CM time based on a skip or trick playback input, registers this detected time as a skip time for the next or subsequent time, and executes skipping corresponding to the registered skip time by a single skip input operation.

However, it is difficult for the technique disclosed in reference 1 to sufficiently cope with changes in CM time in one program. With the technique disclosed in reference 1, a skip time for the next or subsequent time is registered with reference to the first CM time. For this reason, when the CM times may change in one program, it is difficult to skip CM intervals by a simple operation.

It is an object of the invention to provide a program playback apparatus and program playback method, which allow skip playback to cope with changes in CM time in one program.

According to one embodiment of the invention, a program playback apparatus comprising: a playback controller configured to execute skip playback from a position a prescribed skip time ahead of a current playback position in response to one skip instruction during playback of a program, and to execute replay from a position a prescribed replay time back from the current playback position in response to one replay instruction during playback of the program; and a registration module configured to register a successive skip time corresponding to successive skip instructions during playback of the program, and to register a first successive skip updated time, which is calculated based on a successive skip time and at least one of successive replay times corresponding to a successive skip repeat instruction and at least one of successive replay instructions which follow the successive skip repeat instruction, in place of the registered successive skip time, wherein the playback controller is configured to execute the skip playback based on the successive skip time or the first successive skip updated time, which is registered in the registration module, in response to the successive skip repeat instruction.

According to one embodiment of the invention, a program playback method comprising: playing back a program in response to a playback instruction; registering a successive skip time in response to successive skip instructions during playback of the program, and executing skip playback from a position the successive skip time ahead of a current playback position; executing the skip playback based on the registered successive skip time in response to a successive skip repeat instruction; registering a successive skip updated time, which is calculated based on the successive skip time and at least one of successive replay times in response to the successive skip repeat instruction and at least one of successive replay instructions which further follow the successive skip repeat instruction, in place of the registered successive skip time, executing the skip playback from a position the successive skip time ahead of the current playback position, and further executing replay from a position the at least one of successive replay times back; and executing the skip playback based on the successive skip updated time in response to the successive skip repeat instruction.

The invention can be more fully understood from the following detailed description when taken in conjunction with the accompanying drawings, in which:
FIG. 1 is an exemplary block diagram showing the arrangement of a program playback apparatus according to a first embodiment of the invention;
FIG. 2 is a flowchart showing an example of first CM skip processing executed by the program playback apparatus according to the first embodiment;
FIG. 3 is an exemplary block diagram showing the arrangement of a program playback apparatus according to a second embodiment of the invention;
FIG. 4 is a flowchart showing an example of second CM skip processing executed by the program playback apparatus according to the second embodiment;
FIG. 5 is an exemplary block diagram showing the arrangement of a program playback apparatus according to a third embodiment of the invention;
FIG. 6 is a flowchart showing an example of third CM skip processing executed by the program playback apparatus according to the third embodiment;
FIG. 7 is a view showing an example of the first CM skip processing applied to a program including constant CM times (90 seconds);
FIG. 8 is a view showing an example of the first CM skip processing applied to a program including constant CM times (120 seconds);
FIG. 9 is a view showing an example of the first CM skip processing applied to a program in which CM times vary;
FIG. 10 is a view showing an example of the second CM skip processing; and
FIG. 11 is a view showing an example of the third CM skip processing.

Embodiments according to the invention will be described hereinafter with reference to the accompanying drawings.

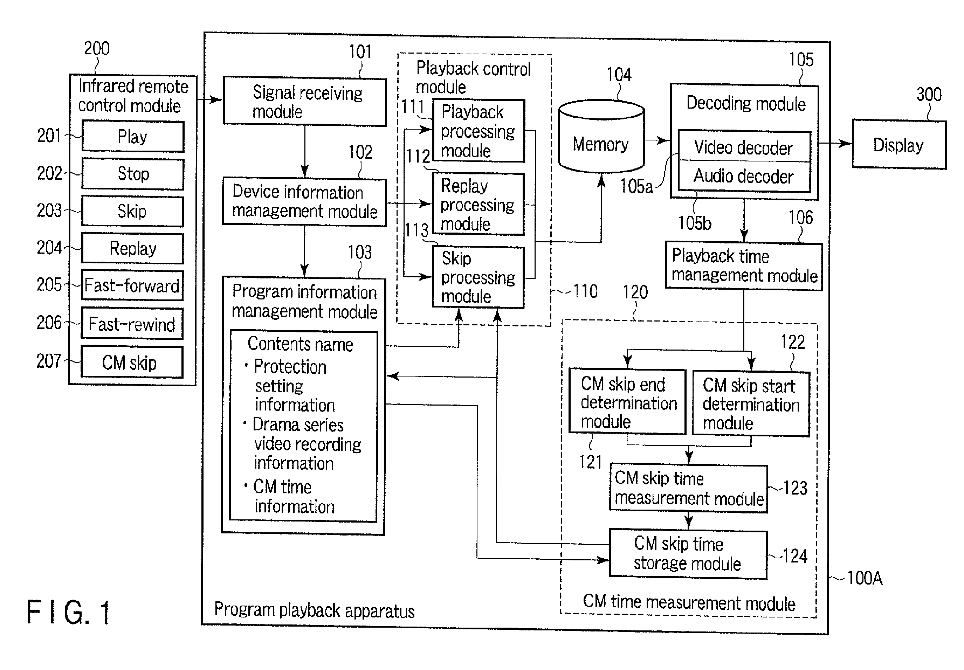

FIG. 1 is an exemplary block diagram showing the arrangement of a program playback apparatus 100A according to a first embodiment of the invention. The program playback apparatus 100A shown in FIG. 1 can record a program (broadcast contents) and can play back a recorded program. Furthermore, this program playback apparatus 100A can restart playback from a position a skip time ahead of the current playback position in response to a skip operation (skip instruction) during playback of a program. That is, this program playback apparatus 100A can play back a program while skipping predetermined intervals (CM intervals) in the program in response to the skip operation.

As shown in FIG. 1, the program playback apparatus 100A includes a signal receiving module (a signal receiver) 101, device information management module (device information manager) 102, program information management module (program information manager) 103, memory 104, decoding module (decoder) 105, video decoder 105a, audio decoder 105b, playback time management module (playback time manager) 106, playback control module (playback controller) 110, playback processing module (playback processor) 111, replay processing module (replay processor) 112, skip processing module (skip processor) 113, CM time measurement module 120, CM skip end determination module 121, CM skip start determination module 122, CM skip time measurement module 123, and CM skip time storage module 124.

An infrared remote control module (An infrared remote controller) 200 includes a play button 201, stop button 202, skip button 203, replay button 204, fast-forward button 205, fast-rewind button 206, and CM skip button 207. The infrared remote control module 200 outputs a control signal corresponding to each button operation. The signal receiving module 101 of the program playback apparatus 100A receives the control signal, and the program playback apparatus 100A operates based on the control signal.

The device information management module 102 manages information associated with the program playback apparatus. The program information management module 103 manages program information such as a contents name.

The playback control module 110 and playback processing module 111 start playback of a program stored in the memory 104 based on a playback instruction in response to an operation of the play button 201, and stop playback of the program based on a stop instruction in response to an operation of the stop button 202. That is, video recorded data (program data) stored in the memory 104 is transmitted to the decoding module 105 based on the playback instruction in response to the operation of the play button 201. The video decoder 105a of the decoding module 105 decodes video data in the video recorded data and outputs the decoded video data to a display 300. Also, the audio decoder 105b of the decoding module 105 decodes audio data in the video recorded data, and outputs the decoded audio data to a loudspeaker or the like.

The playback control module 110 and skip processing module 113 calculate a prescribed skip time of (n × a) seconds (n and a: natural numbers) based on skip instructions in response to successive operations of a times of the skip button 203, and control skip playback from a position the prescribed skip time ahead of the current playback position of a program during playback. For example, the playback control module 110 and skip processing module 113 calculate a prescribed skip time of (30 × 1) seconds based on a skip instruction in response to a single pressing operation of the skip button 203, and control skip playback from a position 30 seconds ahead of the current playback position of the program during playback. With this skip playback control, the decoding module 105 decodes video and audio data at the position 30 seconds ahead of the current playback position of the program during playback, and outputs the decoded video and audio data.

Therefore, the playback control module 110 and skip processing module 113 calculate a successive skip time of (30 × 3) seconds based on successive skip instructions in response to three successive pressing operations of the skip button 203, and control skip playback from a position 90 seconds ahead of the current playback position of the program during playback. Also, the playback control module 110 and skip processing module 113 calculate a successive skip time of (30 × 4) seconds based on successive skip instructions in response to four successive pressing operations of the skip button 203, and control skip playback from a position 120 seconds ahead of the current playback position of the program during playback.

Note that the playback control module 110 is notified of skip instructions received by the signal receiving module 101 via the device information management module 102, and checks based on an interval between the skip instructions if these skip instructions correspond to successive operations (successive pressing operations). For example, when a time from the previous operation timing (the reception timing of the previous skip instruction) to the current operation timing (the reception timing of the current skip instruction) is less than a predetermined time, the playback control module 110 determines the previous and current operations as successive operations.

The playback control module 110 and replay processing module 112 calculate a prescribed replay time of (m × b) seconds (m and b: natural numbers) based on replay instructions in response to successive operations of b times of the replay button 204, and control replay from a position the prescribed replay time back from the current playback position of a program during playback. For example, the playback control module 110 and replay processing module 112 calculate a prescribed replay time of (10 × 1) seconds based on a replay instruction in response to a single pressing operation of the replay button 204, and control replay from a position 10 seconds back from the current playback position of the program during playback. With this replay control, the decoding module 105 decodes video and audio data at the position 10 seconds back from the current playback position of the program during playback, and outputs the decoded video and audio data.

Therefore, the playback control module 110 and replay processing module 112 calculate a successive replay time of (10 × 3) seconds based on successive replay instructions in response to three successive pressing operations of the replay button 204, and control replay from a position 30 seconds back from the current playback position of the program during playback. Also, the playback control module 110 and replay processing module 112 calculate a successive replay time of (10 × 4) seconds based on successive replay instructions in response to four successive pressing operations of the replay button 204, and control replay from a position 40 seconds back from the current playback position of the program during playback.

Note that the playback control module 110 is notified of replay instructions received by the signal receiving module 101 via the device information management module 102, and checks based on an interval between the replay instructions if these replay instructions correspond to successive operations (successive pressing operations). For example, when a time from the previous operation timing (the reception timing of the previous replay instruction) to the current operation timing (the reception timing of the current replay instruction) is less than a predetermined time, the playback control module 110 determines the previous and current operations as successive operations.

Also, the playback control module 110 controls, for example, ×2-speed playback, ×4-speed playback, ×8-speed playback, and ×16-speed playback based on fast-forward instructions in response to operations of the fast-forward button 205. For example, the playback control module 110 starts ×2-speed playback in response to a single pressing operation of the fast-forward button 205. Also, the playback control module 110 starts ×4-speed playback in response to a single pressing operation of the fast-forward button 205 during the ×2-speed playback. Furthermore, the playback control module 110 starts ×8-speed playback in response to a single pressing operation of the fast-forward button 205 during the ×4-speed playback. Moreover, the playback control module 110 starts ×16-speed playback in response to a single pressing operation of the fast-forward button 205 during the ×8-speed playback.

The playback control module 110 controls, for example, ×2-speed rewind playback, ×4-speed rewind playback, ×8-speed rewind playback, and ×16-speed rewind playback based on fast-rewind instructions in response to operations of the fast-rewind button 206. For example, the playback control module 110 starts ×2-speed rewind playback in response to a single pressing operation of the fast-rewind button 206.

Also, the playback control module 110 starts ×4-speed rewind playback in response to a single pressing operation of the fast-rewind button 206 during the ×2-speed rewind playback. Furthermore, the playback control module 110 starts ×8-speed rewind playback in response to a single pressing operation of the fast-rewind button 206 during the ×4-speed rewind playback. Moreover, the playback control module 110 starts ×16-speed rewind playback in response to a single pressing operation of the fast-rewind button 206 during the ×8-speed rewind playback.

The playback time management module 106 manages playback time information of video recorded data. For example, the playback time management module 106 manages playback time information corresponding to the current playback position. At the time of skip playback, the playback time management module 106 jumps to a position n seconds ahead (a time 30 seconds ahead) with reference to the playback time information corresponding to the current playback position. Also, at the time of replay, the playback time management module 106 jumps to a position m seconds back (30 seconds back) with reference to the playback time information corresponding to the current playback position.

The CM time measurement module 120 (registration module) measures a CM time based on the playback time information, skip instruction, and replay instruction. The measurement of the CM time will be described in detail later.

The program information management module 103 manages program information associated with each program stored in the memory 104. For example, the program information includes protection setting information, drama series video recording information (series video recording information), and CM time information. The protection setting information is used to control whether or not to allow to delete a program. The drama series video recording information indicates whether or not a given program corresponds to a drama series. For example, the drama series video recording information of a program, which was selected by directly designating a program or a broadcasting time, and was recorded, indicates that "the program of interest does not correspond to a drama series". On the other hand, the drama series video recording information of a program, which was selected by indirectly designating a keyword or a broadcasting cycle, and was recorded, indicates that "the program of interest corresponds to a drama series". The CM time information is that calculated by the CM time measurement module 120. For example, the CM time information is that calculated based on successive operations of at least either of skip instructions or replay instructions during playback of a program. More specifically, the CM time information is that calculated based on the last (latest) successive operations.

The CM time measurement module 120 measures a CM time based on, e.g., successive skip instructions during playback of a program. For example, the CM time measurement module 120 determines a CM time = 90 seconds based on three successive skip instructions during playback of a program, and registers the CM time = 90 seconds. In a state in which the CM time = 90 seconds is registered, the playback control module 110 and skip processing module 113 execute skip playback based on the CM time = 90 seconds (successive skip time) and based on a CM skip instruction (successive skip repeat instruction) in response to one pressing operation of the CM skip button 207. That is, playback from a position 90 seconds ahead of the current playback position can be implemented by one pressing operation of the CM skip button 207. That is, skip playback equivalent to the three successive operations of the skip button 203 can be implemented by one pressing operation of the CM skip button 207.

Note that playback from a position 90 seconds ahead of the current playback position may be implemented by a long pressing operation of the skip button 203. That is, playback from a position 30 seconds ahead of the current playback position (prescribed skip playback) is implemented by a short pressing operation (first operation time) of the skip button 203, and playback from a position 90 seconds ahead of the current playback position (successive skip playback) is implemented by a long pressing operation (second operation time) of the skip button 203.

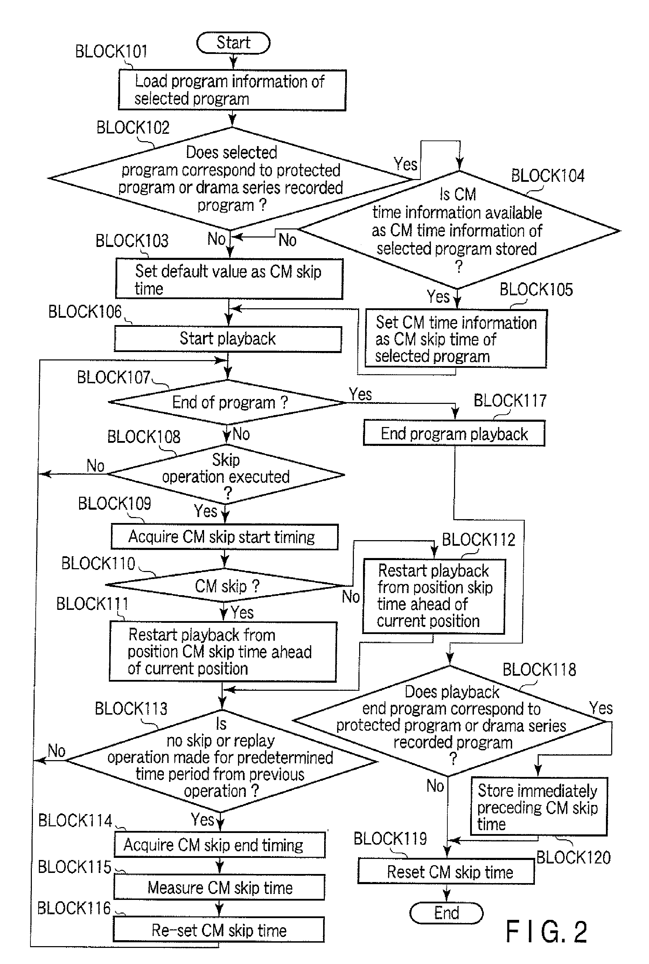

First CM skip processing will be described below with reference to the flowchart shown in FIG. 2.

The device information management module 102 loads, from the program information management module 103, program information of a program which is selected in response to an operation of the infrared remote control module 200 (BLOCK 101). Upon completion of loading of the program information, the playback control module 110 checks based on the program information if the selected program corresponds to a protection setting program, a drama series, and so forth (BLOCK 102).

If the selected program corresponds to a protection setting program or drama series (YES in BLOCK 102), the playback control module 110 confirms if CM time information corresponding to the selected program has already been stored (BLOCK 104). For example, if the selected program corresponds to a drama series, CM time information which is associated with the same title as that of the selected program may have already been stored. A CM time in each program corresponding to a certain drama series is often the same. Hence, in such case (YES in BLOCK 104), the playback control module 110 sets the already stored CM time information in the CM skip time storage module 124 as a CM skip time of the selected program (BLOCK 105). If CM time information corresponding to the selected program is not stored (BLOCK 104), the playback control module 110 sets an initial value = x seconds (x: a natural number) in the CM skip time storage module 124 as a CM skip time of the selected program (BLOCK 103). For example, the initial value = x seconds is 0 second, 90 seconds, or the like, and can also be freely changed by the user. If the selected program does not correspond to a protection setting program or drama series (NO in BLOCK 102), the playback control module 110 also sets the initial value = x seconds in the CM skip time storage module 124 as a CM skip time of the selected program (BLOCK 103).

Upon completion of the setting of the CM skip time, the playback control module 110 supplies video recorded data corresponding to the selected program to the decoding module 105. The video decoder 105a of the decoding module 105 decodes video data in the video recorded data, and outputs the decoded video data to the display 300. Also, the audio decoder 105b of the decoding module 105 decodes audio data in the video recorded data, and outputs the decoded audio data to a loudspeaker or the like (BLOCK 106).

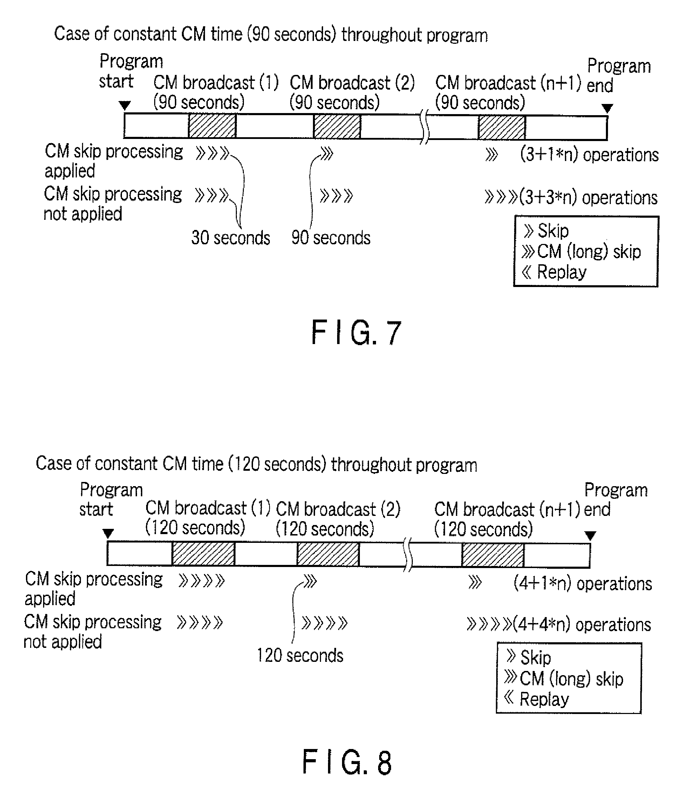

For example, assume that the user presses the skip button 203 once at a playback start timing of CM broadcast (1) during playback of a program (NO in BLOCK 107), and then successively presses the skip button 203 twice, as shown in FIG. 7. That is, when the user successively presses the skip button 203 a total of three times (YES in BLOCK 108) to notify successive skip instructions, the CM skip start determination module 122 acquires a playback position (current playback position) at that instance (at an instance of the first skip operation) from the playback time management module 106 as a CM skip start timing (BLOCK 109 and NO in BLOCK 110). The playback control module 110 and skip processing module 113 calculate a successive skip time of (30 × 3) seconds, and execute skip playback from a position 90 seconds ahead of the current playback position (BLOCK 112).

After that, if the user does not input any skip instruction and replay instruction that follow the aforementioned three successive operations (YES in BLOCK 113), it is determined that the user restarts viewing of the program from a playback position after the three successive operations. That is, it is determined that the playback position after the three successive operations is an appropriate program playback restart position. Therefore, if the user does not input any skip instruction and replay instruction that follow the aforementioned three successive operations (YES in BLOCK 113), the CM skip end determination module 121 acquires that playback restart position from the playback time management module 106 as a CM skip end timing (BLOCK 114).

The CM skip time measurement module 123 calculates a CM skip time (90 seconds) based on a difference between the CM skip start timing and CM skip end timing (BLOCK 115). Upon completion of the calculation of the CM skip time, the CM skip time storage module 124 updates the already registered CM skip time by the calculated CM skip time (BLOCK 116). Alternatively, the CM skip time measurement module 123 measures a CM skip time based on successive skip instructions during playback of the program. For example, the CM skip time measurement module 123 calculates a CM skip time (30 × 3 = 90 seconds) based on three successive skip instructions during playback of the program. A CM skip time is set in BLOCK 103 and BLOCK 105, but a more accurate CM skip time can be acquired in response to skip operations corresponding to CM broadcast (1).

If the user presses the CM skip button 207 at, e.g., a playback start timing of CM broadcast (2) during playback of the program (NO in BLOCK 107), as shown in FIG. 7, while 90 seconds are registered as the CM skip time (YES in BLOCK 110), a CM skip instruction (successive skip repeat instruction) is notified, and the skip processing module 113 executes skip playback based on the CM skip time (90 seconds). That is, the skip processing module 113 restarts playback from a position the CM skip time (90 seconds) ahead of the current playback position (BLOCK 111). In this manner, skip playback corresponding to the three operations of the skip button 203 can be executed by a single operation of the CM skip button 207.

In the above description, the case has been explained with reference to FIG. 7 wherein the CM skip processing is applied when the program includes a constant CM time = 90 seconds. Also, as shown in FIG. 8, the CM skip processing can be applied to a case in which the program includes a constant CM time = 120 seconds. That is, assume that the user presses the skip button 203 once at a playback start timing of CM broadcast (1) during playback of a program, and then successively presses the skip button 203 three times, as shown in FIG. 8. That is, when the user successively presses the skip button 203 a total of four times to notify successive skip instructions, the playback control module 110 and skip processing module 113 calculate a successive skip time of (30 × 4) seconds, and execute skip playback from a position 120 seconds ahead of the current playback position. After that, when the user presses the CM skip button 207 at, e.g., a playback start timing of CM broadcast (2) during playback of the program, a CM skip instruction (successive skip repeat instruction) is notified, and the skip processing module 113 executes skip playback based on the CM skip time (120 seconds). That is, the skip processing module 113 restarts playback from a position the CM skip time (120 seconds) ahead of the current playback position. In this manner, skip playback corresponding to the four operations of the skip button 203 can be executed by a single operation of the CM skip button 207.

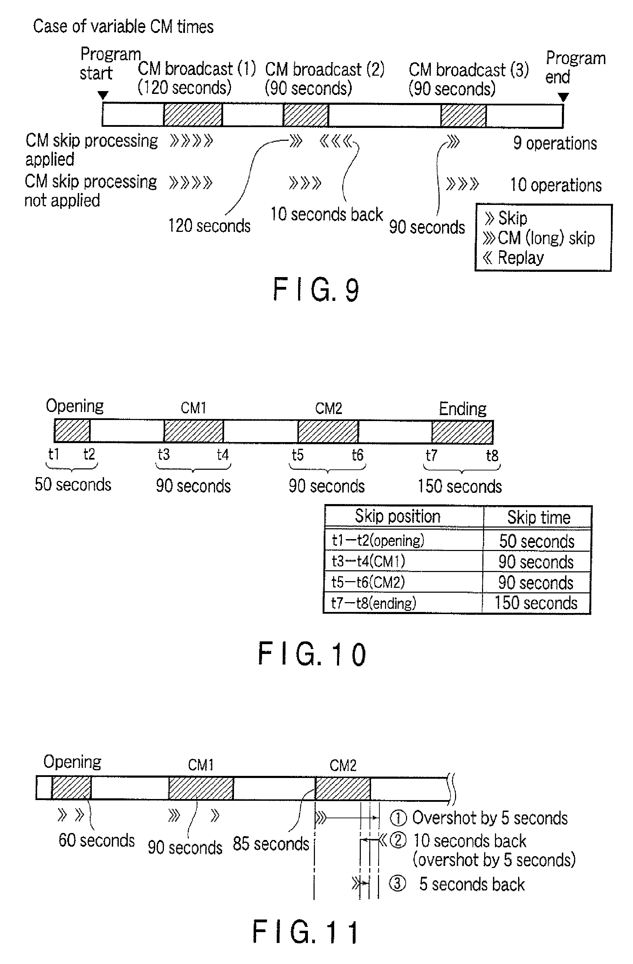

Also, as shown in FIG. 9, assume that the user presses the skip button 203 once at a playback start timing of CM broadcast (1) during playback of a program (NO in BLOCK 107), and then successively presses the skip button 203 three times. That is, when the user successively presses the skip button 203 a total of four times (YES in BLOCK 108) to notify successive skip instructions, the CM skip start determination module 122 acquires a playback position (current playback position) at that instance (the reception timing of the first skip instruction) from the playback time management module 106 as a CM skip start timing (BLOCK 109 and NO in BLOCK 110). The playback control module 110 and skip processing module 113 then calculate a successive skip time of (30 × 4) seconds, and executes skip playback from a position 120 seconds ahead of the current playback position (BLOCK 112).

After that, if the user does not input any skip instruction and replay instruction that follow the aforementioned four successive operations (YES in BLOCK 113), it is determined that the user restarts viewing of the program from a playback position after the four successive operations. That is, it is determined that the playback position after the four successive operations is an appropriate program playback restart position. Therefore, if the user does not input any skip instruction and replay instruction that follow the aforementioned four successive operations (YES in BLOCK 113), the CM skip end determination module 121 acquires that playback restart position from the playback time management module 106 as a CM skip end timing (BLOCK 114).

The CM skip time measurement module 123 calculates a CM skip time (120 seconds) based on a difference between the CM skip start timing and CM skip end timing (BLOCK 115). The CM skip time storage module 124 updates the already registered CM skip time by the calculated CM skip time (BLOCK 116). Alternatively, the CM skip time measurement module 123 measures a CM skip time based on successive skip instructions during playback of the program. For example, the CM skip time measurement module 123 calculates a CM skip time (30 × 4 = 120 seconds) based on four successive skip instructions during playback of the program.

If the user presses the CM skip button 207 at, e.g., a playback start timing of CM broadcast (2) during playback of the program (NO in BLOCK 107), as shown in FIG. 9, while the CM skip time (120 seconds) is registered (YES in BLOCK 110), a CM skip instruction (successive skip repeat instruction) is notified, and the skip processing module 113 executes skip playback based on the CM skip time (120 seconds). That is, the skip processing module 113 restarts playback from a position the CM skip time (120 seconds) ahead of the current playback position (BLOCK 111).

At this time, when the playback restart position unwantedly enters a main title beyond CM broadcast (2), for example, the user may immediately operate the replay button 204 a number of times to set the playback restart position back. That is, the user may rewind the playback restart position by one or more replay instructions (successive replay instructions) that follow the CM skip instruction (successive skip repeat instruction). In the case of FIG. 9, the playback restart position is set 30 seconds (10 × 3) back by three replay instructions that follow the CM skip instruction (successive skip repeat instruction). After that, if the user does not input any skip instruction and replay instruction that further follow the CM skip instruction (successive skip repeat instruction) and the three replay instructions (YES in BLOCK 113), it is determined that the user restarts viewing of the program from the playback restart position which is set 30 seconds back from the CM skip instruction (successive skip repeat instruction). That is, it is determined that the playback restart position which is set 30 seconds back from the CM skip instruction is an appropriate program playback restart position. Therefore, if the user does not input any skip instruction and replay instruction that further follow the CM skip instruction and the three replay instructions (YES in BLOCK 113), the CM skip end determination module 121 acquires the playback restart position from the playback time management module 106 as a CM skip end timing (BLOCK 114).

The CM skip time measurement module 123 calculates a CM skip time (90 seconds) based on a difference between the CM skip start timing and CM skip end timing (BLOCK 115). The CM skip time storage module 124 updates the already registered CM skip time (120 seconds) by the calculated CM skip time (90 seconds) (BLOCK 116). Alternatively, the CM skip time measurement module 123 calculates a CM skip time (120 - 30 = 90 seconds) based on the CM skip instruction (120 seconds) and three replay instructions (30 seconds) during playback of the program.

If the user presses the CM skip button 207 at, e.g., a playback start timing of CM broadcast (3) during playback of the program (NO in BLOCK 107), as shown in FIG. 9, while the CM skip time (90 seconds) is registered (YES in BLOCK 110), a CM skip instruction (successive skip repeat instruction) is notified, and the skip processing module 113 executes skip playback based on the CM skip time (90 seconds). That is, the skip processing module 113 restarts playback from a position the CM skip time (90 seconds) ahead of the current playback position (BLOCK 111). In this manner, since the CM skip time is updated based on the previous operations, a CM time which varies during one program can be coped with.

Even in a case in which a CM interval of 150 seconds is repeated times after a CM interval of 90 seconds, the first CM skip processing can cope with a variable CM interval since it updates the registered CM skip time. By inputting two skip instructions (30 seconds × 2) that follow the CM skip instruction (to skip 90 seconds), the registered CM skip time (90 seconds) is updated to a new CM skip time (150 seconds).

Upon completion of program playback (BLOCK 117), the playback control module 110 checks if the playback end program corresponds to a protection setting program or a drama series video recording program (BLOCK 118). If the playback end program corresponds to a protection setting program or a drama series video recording program (YES in BLOCK 118), the playback control module 110 stores the registered CM skip time in the CM time information of the program information management module 103 (BLOCK 120), resets the registered CM skip time to the initial value (BLOCK 119), and ends the CM skip processing. If the playback end program does not correspond to a protection setting program or the like (NO in BLOCK 118), the playback control module 110 resets the registered CM skip time to the initial value (BLOCK 119). By resetting the registered CM skip time to the initial value in this way, different CM durations depending on programs can be coped with.

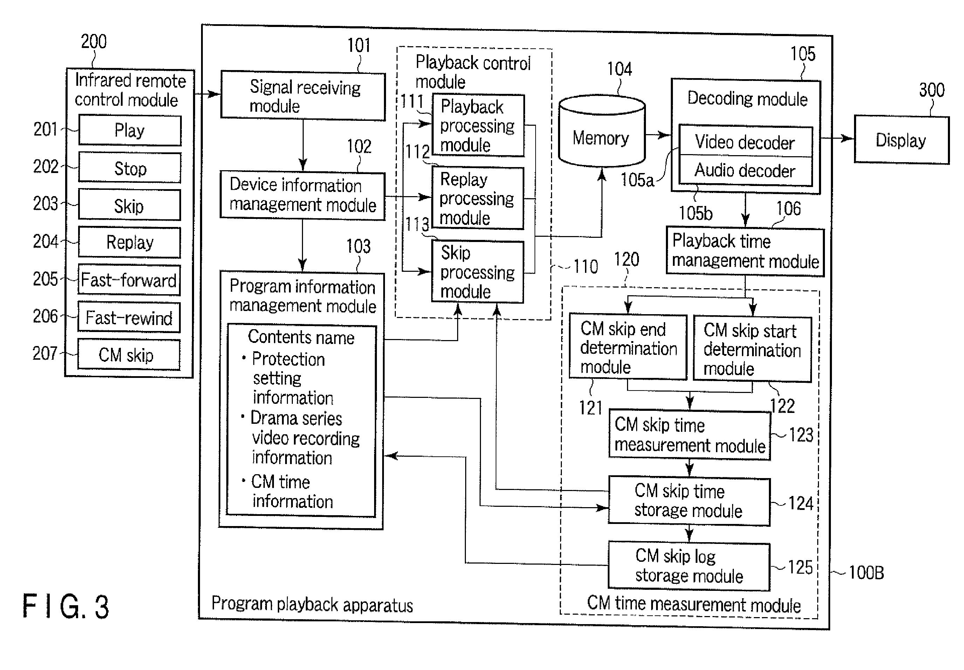

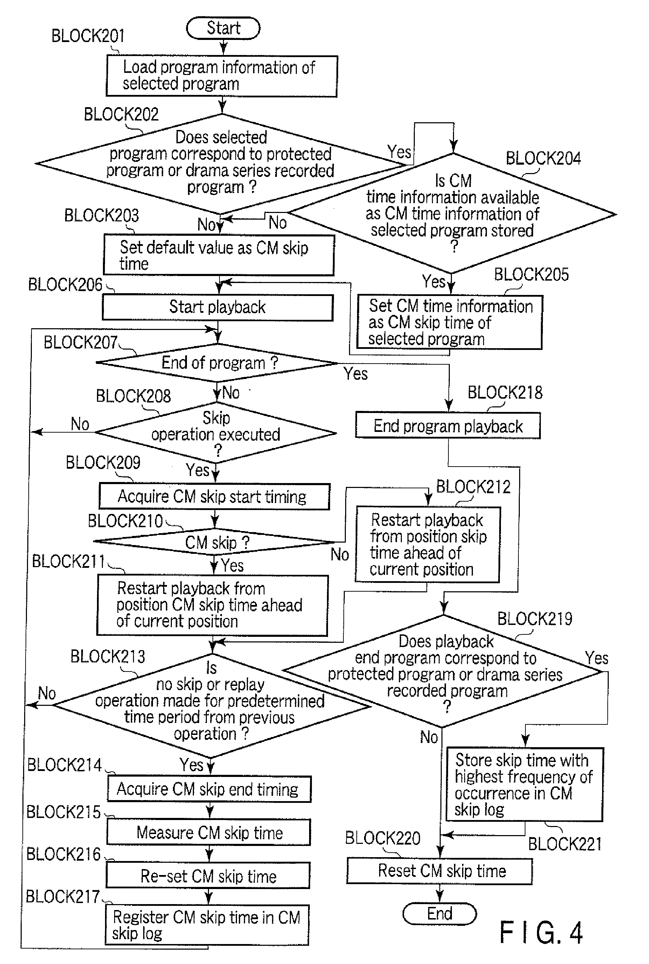

FIG. 3 is a schematic block diagram showing the arrangement of a program playback apparatus 100B according to a second embodiment of the invention. FIG. 4 is a flowchart showing an example of second CM skip processing. The program playback apparatus 100B shown in FIG. 3 includes a CM skip log storage module 125 in addition to the components of the program playback apparatus 100A shown in FIG. 1. A detailed description of the common components will not be repeated. In the second CM skip processing shown in FIG. 4, BLOCK 201 to BLOCK 216 and BLOCK 218 to BLOCK 220 correspond to BLOCK 101 to BLOCK 116 and BLOCK 117 to BLOCK 119 in the first CM skip processing shown in FIG. 2. A detailed description of the common processes will not be repeated.

In the second CM skip processing, the CM skip log storage module 125 registers all calculated CM skip times (BLOCK 217). Upon completion of program playback (BLOCK 218), a playback control module 110 checks if a playback end program corresponds to a protection setting program or a drama series video recording program (BLOCK 219). If the playback end program corresponds to a protection setting program or a drama series video recording program (YES in BLOCK 219), the playback control module 110 stores a CM skip time with the highest frequency of occurrence of all the registered CM skip times except for the first and last registered CM skip times in CM time information of a program information management module 103 (BLOCK 221), resets the registered CM skip time to the initial value (BLOCK 220), and ends the CM skip processing. If the playback end program does not correspond to a protection setting program or the like (NO in BLOCK 219), the playback control module 110 resets the registered CM skip time to the initial value (BLOCK 220).

The reason why the first and last registered CM skip times are excluded from all the registered CM skip times is that the first successive skip operations of a program may be those corresponding to an opening of the program, and the last successive skip operations of the program may be those corresponding to an ending of the program. By executing the processing for storing the CM skip time having the highest frequency of occurrence, a CM skip time can be set without being influenced by the opening and ending of the program.

However, the processing for storing the CM skip time having the highest frequency of occurrence is executed at the time of first playback of the program. This is because skip playback may be frequently used even in a main title part other than CMs according to user's preference at the time of second or subsequent playback of the program.

The CM skip processing will be described in more detail below with reference to FIG. 10. A program shown in FIG. 10 includes an opening (t1 to t2), CM1 (t3 to t4), CM2 (t5 to t6), and ending (t7 to t8) in addition to a main title. At this time, the user may play back this program while skipping a part other than the main title. At this time, when the last skip time is stored as a CM skip time, a skip time (150 seconds) of the ending is set as the CM skip time. However, in the second CM skip processing, a CM skip time having the highest frequency of occurrence of all registered CM skip times except for the first and last registered CM skip times is set. That is, a correct CM skip time (90 seconds) can be set without being influenced by the opening and ending.

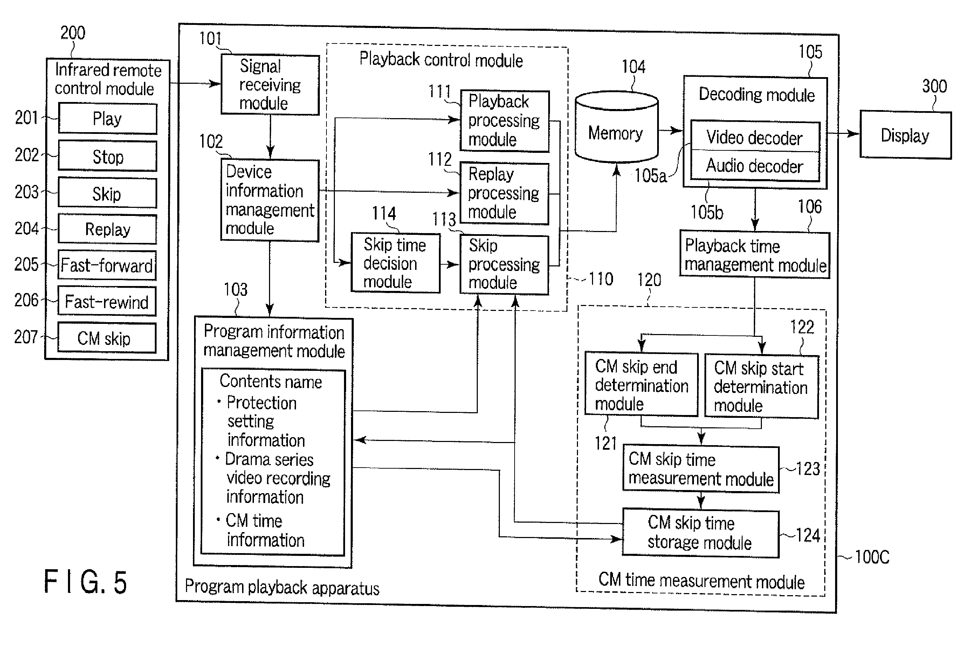

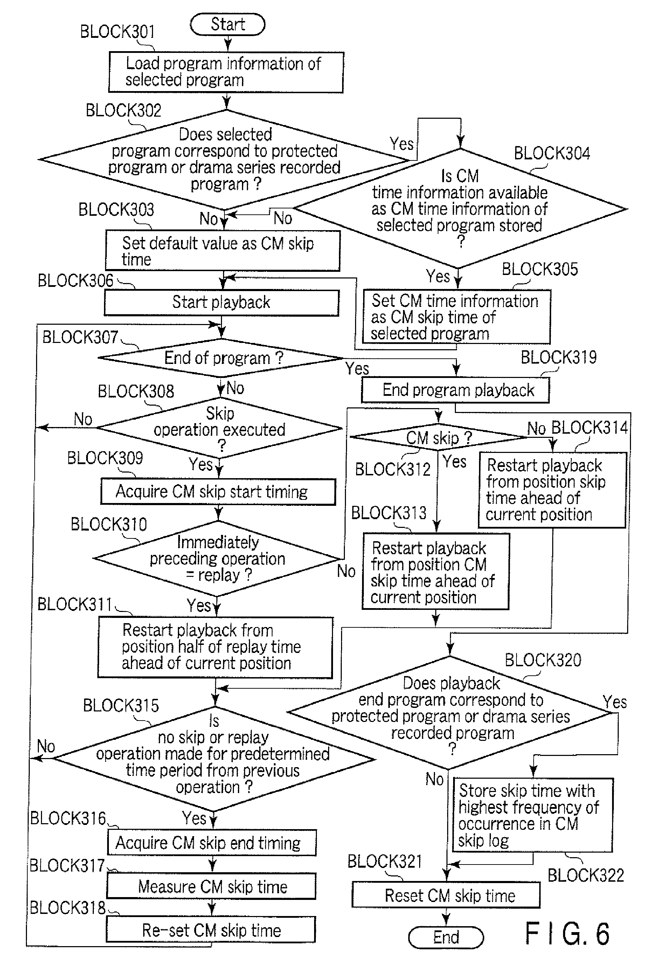

FIG. 5 is an exemplary block diagram showing a program playback apparatus 100C according to a third embodiment of the invention. FIG. 6 is a flowchart showing an example of third CM skip processing. The program playback apparatus 100C shown in FIG. 5 includes a skip time decision module 114 in addition to the components of the program playback apparatus 100A shown in FIG. 1. A detailed description of the common components will not be repeated. In the third CM skip processing shown in FIG. 6, BLOCK 301 to BLOCK 309 and BLOCK 312 to BLOCK 322 correspond to BLOCK 101 to BLOCK 109 and BLOCK 110 to BLOCK 120 in the first CM skip processing shown in FIG. 2. A detailed description of the common processes will not be repeated.

In the third CM skip processing, a playback control module 110 checks the presence/absence of the operation of a replay button 204 immediately before that of a skip button 203 during playback of a program (BLOCK 310). That is, if a replay instruction is issued immediately before a skip instruction (YES in BLOCK 310), the skip time decision module 114 decides a time half of a replay time corresponding to the immediately preceding replay instruction as a skip time, and a skip processing module 113 executes skip playback based on the decided skip time (BLOCK 311).

The operation of the replay button 204 immediately before that of the skip button 203 is estimated as an operation to set a playback restart position back since the user skips to a position ahead of a CM interval although he or she wants to skip only a CM interval. Then, it is to prevent from skipping to a position ahead of the CM interval again by the operation of the skip button 203 immediately after that of the replay button 204. Hence, the skip time decision module 114 decides a time half of the replay time as a skip time, and the skip processing module 113 executes skip playback based on the decided skip time.

The CM skip processing will be described in more detail below with reference to FIG. 11. A program shown in FIG. 11 includes a 60-sec opening, 90-sec CM1, and 85-sec CM2. For example, the user successively presses the skip button 203 twice at the playback start timing of the opening during playback of the program, a CM skip time (60 seconds) is registered in response to these pressing operations, and playback restarts from a position 60 seconds ahead of the playback start position of the opening.

Subsequently, when the user presses the CM skip button 207 once at the playback start timing of the CM1, playback restarts from a position the CM skip time (60 seconds) ahead of the playback start position of the CM1. At this time, since the playback restart position is in the middle of the CM1, the user presses the skip button 203 once more, and the registered CM skip time (60 seconds) is updated to a new CM skip time (90 seconds) in response to this operation. Then, playback restarts from a position 90 seconds ahead of the playback start position of the CM1.

When the user then presses the CM skip button 207 once at the playback start timing of the CM2, playback restarts from a position the CM skip time (90 seconds) ahead of the playback start position of the CM2. At this time, since the playback restart position enters a main title beyond the CM2, the user further presses the replay button 204 once, and the playback restart position is set 10 seconds back in response to this operation. However, the playback restart position overshoots by 5 seconds.

By assuming overshooting due to such repetition of the operations of the skip button 203 and replay button 204, when the user pressed the replay button 204 immediately before the operation of the skip button 203, a time (5 seconds) half of a replay time (10 seconds) in response to an immediately preceding replay instruction is decided as a skip time, and skip playback is executed based on the decided skip time.

Note that the first, second, and third CM skip processing operations may be executed as follows.

For example, the case has been described with reference to FIG. 9 wherein the registered CM skip time (120 seconds) is updated to a new CM skip time (90 seconds) based on replay instructions which follow a CM skip instruction. Alternatively, the registered CM skip time (120 seconds) may be reset to an initial value based on replay instructions that follow a CM skip instruction.

Or the registered CM skip time may be output to a display 300. Then, since the display 300 displays the CM skip time, the user can detect the skip time by the operation of the CM skip key 207, and can easily use the CM skip key.

The display timing of the CM skip time is as follows:
1. at the timing of new registration or updating of a CM skip time;
2. at the end timing of program playback;
3. at the display operation timing of a CM skip time by an infrared remote control module 200; and
4. at the playback timing of a program (all the time).

The first, second, or third CM skip processing is combined with a CM interval automatic discrimination technique to allow accurate CM skipping. The CM interval automatic discrimination technique is to discriminate a CM interval based on, e.g., a change in video data or audio data in video recorded data. For example, a broadcasting method that sandwiches a blue video picture at a boundary between a main title and CM is known. By detecting this blue video picture, a CM interval can be automatically discriminated. A CM skip time may be measured based on a skip instruction and replay instruction during a CM interval which is discriminated by the CM interval automatic discrimination technique.

When a CM skip time is set by the second CM skip processing, a CM time may not be re-set by the first successive skip processing operations executed during the second or subsequent viewing. This is because the first successive skip processing operations of a program is more likely to be executed for the purpose of skipping a program opening in place of a CM. Since the CM time is not re-set under the aforementioned condition, the CM skip time set by the second CM skip processing can be prevented from being replaced by the program opening time.

Note that it is known that several seconds take after a CM is displayed on the display 300 until the user presses the CM skip button 207. In consideration of this fact, the skip time of the first skip operation of the successive CM skip processing operations may be shortened by about 3 seconds from the set time. This is disclosed in Jpn. Pat. Appln. KOKAI Publication No. 2002-152687.

In the above description, the first, second, and third CM skip processing operations are applied to the program playback apparatus. Alternatively, these first, second, and third CM skip processing operations may be applied to a program recording apparatus.

In the above description, the CM skip processing using skip playback and replay has been exemplified. The skip operation may be replaced by a fast-forward operation, and the replay operation may be replaced by a fast-rewind operation. For example, a fast-forwarded time from the current playback position can be detected from the type of fast-forwarding (×2-speed, ×4-speed, or the like) and the fast-forward execution time. This fast-forwarded time can be set as a CM skip time. Likewise, a fast-forwarded time and fast-rewound time can be detected from the type of fast-forwarding and fast-forward execution time, and the type of fast-rewinding and fast-rewind execution time. A moving time calculated based on the fast-forwarded time and fast-rewound time can be set as a CM skip time.

According to the aforementioned first, second, and third CM skip processing operations, the following effects can be obtained.
(1) A CM interval can be skipped by a simple operation (by a fewer number of operations).
(2) Since a CM skip time is updated according to the skip operation and replay operation, a variation of the CM interval can also be coped with.

The various modules of the device described herein can be implemented as software applications, hardware and/or software modules, or components on one or more computers, such as servers. While the various modules are illustrated separately, they may share some or all of the same underlying logic or code.

## Claims

1. A program playback apparatus **characterized by** comprising:
a playback controller (110) configured to execute skip playback from a position a prescribed skip time ahead of a current playback position in response to one skip instruction during playback of a program, and to execute replay from a position a prescribed replay time back from the current playback position in response to one replay instruction during playback of the program; and
a registration module (120) configured to register a successive skip time corresponding to successive skip instructions during playback of the program, and to register a first successive skip updated time, which is calculated based on a successive skip time and at least one of successive replay times corresponding to a successive skip repeat instruction and at least one of successive replay instructions which follow the successive skip repeat instruction, in place of the registered successive skip time,
wherein the playback controller is configured to execute the skip playback based on the successive skip time or the first successive skip updated time, which is registered in the registration module, in response to the successive skip repeat instruction.

2. The apparatus of Claim 1, **characterized in that** the playback controller is configured to determine, as the successive skip instructions, the skip instructions which are successively issued within less than a predetermined time, and to determine, as the successive replay instructions, replay instructions which are issued within less than the predetermined time after the successive skip repeat instruction.

3. The apparatus of Claim 1, **characterized by** further comprising:
an operation module (200) including a first operation member (203) which outputs the skip instruction, and a second operation member (207) which outputs the successive skip repeat instruction.

4. The apparatus of Claim 1, **characterized by** further comprising:
an operation module (200) including an operation member which outputs the skip instruction in correspondence with a first operation time, and outputs the successive skip repeat instruction in correspondence with a second operation time longer than the first operation time.

5. The apparatus of Claim 1, **characterized in that** the registration module is configured to register a second successive skip updated time, obtained by adding the successive skip time and at least one of successive skip times, which correspond to the successive skip repeat instruction and at least one of successive skip instructions which are further successively issued after the successive skip repeat instruction, in place of the registered successive skip time.

6. A program playback method **characterized by** comprising:
playing back a program in response to a playback instruction (BLOCK 106);
registering a successive skip time in response to successive skip instructions during playback of the program, and executing skip playback from a position the successive skip time ahead of a current playback position (BLOCK 112, BLOCK 113 - BLOCK 116);
executing the skip playback based on the registered successive skip time in response to a successive skip repeat instruction (BLOCK 111);
registering a successive skip updated time, which is calculated based on the successive skip time and at least one of successive replay times in response to the successive skip repeat instruction and at least one of successive replay instructions which further follow the successive skip repeat instruction, in place of the registered successive skip time, executing the skip playback from a position the successive skip time ahead of the current playback position, and further executing replay from a position the at least one of successive replay times back (BLOCK 111, BLOCK 113 - BLOCK 116); and
executing the skip playback based on the successive skip updated time in response to the successive skip repeat instruction (BLOCK 111).
